# EUROPEAN PATENT SPECIFICATION

(11) **EP 2 297 437 B1**
(45) Date of publication and mention of the grant of the patent: **23.11.2011**
(21) Application number: 09769415.2
(22) Date of filing: 11.06.2009
(51) Int. Cl.: F02B 29/04, B60K 11/04, F01N 13/08, F02M 35/10, F28F 9/26

(54) **COMBUSTION ENGINE**
VERBRENNUNGSMOTOR
MOTEUR À COMBUSTION

(30) Priority: 26.06.2008 FI 20085649
(43) Date of publication of application: 23.03.2011
(73) Proprietor: Wärtsilä Finland Oy, 65380 Vaasa (FI)
(72) Inventor: SANDBERG, Juho, FI-20810 Turku (FI)
(74) Representative: Gustafsson, Aulis Valdemar
(86) International application number: PCT/FI2009/050501
(87) International publication number: WO 2009/156572

(56) References cited:
- EP-A2- 1 329 610
- WO-A2-2007/035972
- DE-A1- 2 105 657
- GB-A- 2 389 147
- JP-A- 2004 027 901

## Description

The invention relates to a combustion engine according to the preamble of Claim 1, comprising several cylinders, which are arranged in at least one row, the engine being provided with an air compressor and a compressed air channel that extends over substantially the entire length of the cylinder row, for feeding compressed air into the cylinders, whereby the compressed air channel is located adjacent to the cylinder row, and with an exhaust manifold that is in communication with the cylinders and supported by the compressed air channel.

In particular, the invention relates to large combustion engines, which are suitable, for example, for the main or auxiliary engines of ships or for power plants in the production of heat and/or electricity.

The air, which constitutes a part of the combustion process of the multi-cylinder combustion engine that is provided with an air compressor, is conducted, after the air compressor, to the engine cylinders through an compressed air channel. The temperature of the compressed air influences the engine output. Accordingly, by cooling the suction air of the engine that comes from the air compressor and is fed into the engine cylinders, a larger amount of oxygen is obtained by the same volume flow. Cooling of the suction air can be carried out by an intercooler after the air compressor, whereby the cooler can also be located in the compressed air channel connected to the cylinder row, the supercharged suction air being branched from the channel to each cylinder. A solution like this is disclosed in the patent specification US 6910469 B2.

The specification US 2005/0235942 A1 shows a V engine, wherein between the cylinder rows and near the cylinders, there is a suction manifold, above which cooling equipment is provided. In this solution, the exhaust manifolds are placed on top of the cylinder rows on different sides of the suction manifold. The solution as such is fairly compact and space-saving.

One solution that is also advantageous for the space utilization is to support the exhaust pipe or manifold by the compressed air channel that is connected to the cylinder row(s). There is a problem then that hot exhaust gases also heat the gases of the compressed air channel, as heat can expressly transfer by conduction along the structures from the exhaust manifold to the structures of the compressed air channel. Measurements have shown that in a combustion engine that uses gas fuel, for example, the compressed air in the compressed air channel is heated by 5 °C as a result of the heat conducted from the exhaust piping. The engine power drops by 1% / 1 °C, when the temperature of the compressed air exceeds 55 °C. In an 18-cylinder V engine, this 1% can be 170 kW/°C. In a power plant with ten engines, each degree thus lowers the capacity of the plant by 1.7 MW.

On the one hand, the exhaust manifold can be supported so that it is located at a distance from the compressed air channel, so that the distance travelled by heat increases. However, the problem cannot be solved like this, in practice, as too much heat is still transferred by conduction, causing power loss in the engine and, on the other hand, the solution thus becomes more space-consuming, respectively.

The object of the invention is to provide a combustion engine solution that minimizes the above-mentioned problems of the known technology. In particular, the object of the invention is to provide a solution with a compact structure, which in terms of energy saving is also as advantageous as possible.

The objects of the invention are mainly achieved by the method described in detail in claim 1 and in the other claims. According to the invention, a cooling arrangement is arranged between the compressed air channel and the exhaust manifold. In this way, it is possible to effectively prevent the transfer of heat, which is conducted from the exhaust manifold, through the structures to the compressed air that is fed into the cylinders, and the resulting drop in engine power, while the structure of the engine can be kept as compact as possible.

The cooling arrangement is an integral part of the compressed air channel. In that case, they can be cast together, for example.

By attaching the exhaust manifold to the cooling arrangement by a number of support elements that are spaced apart, the transfer of heat by direct conduction can be reduced.

At its simplest, the cooling arrangement comprises a coolant channel, into which cooling medium is fed, which can preferably comprise cooling water of the low-temperature (LT) circuit of the engine. In practice, its temperature is in the order of 35-40 °C.

The cooling medium is preferably fed into the cooling arrangement through the end of the engine on the side of the air compressor, i.e., through the hotter end of the exhaust manifold.

Regarding the space utilization, the invention can most preferably be applied in the case where the combustion engine is a so-called V engine, whereby the compressed air channel, exhaust manifold and cooling arrangement are placed between the cylinder rows of the engine.

In the following, the invention is described by way of an example and with reference to the appended schematic drawings, wherein:
- Fig. 1 is a schematic drawing of a combustion engine according to the invention, and
- Fig. 2 illustrates the combining of the compressed air channel and the exhaust manifold according to an embodiment of the invention.

The reference number 1 in the drawings refers to the combustion engine, which in this case is a V engine that includes a body part 1 a, which comprises cylinders 2a, and a body part 1b, which comprises cylinders 2b. The engine is provided with an air compressor 3, the compressor section of which feeds compressed air into a compressed air channel 4, which extends over the entire rows of cylinders and is located between the body parts 1 a and 1 b. The compressed air channel 4 is in communication with each cylinder 2a and 2b for feeding the suction air of the cylinders that is needed in the combustion process. The combustion products of the cylinders are removed by an exhaust manifold 5, which is also in communication with each cylinder 2a and 2b and which is connected to a turbine section of the air compressor 3.

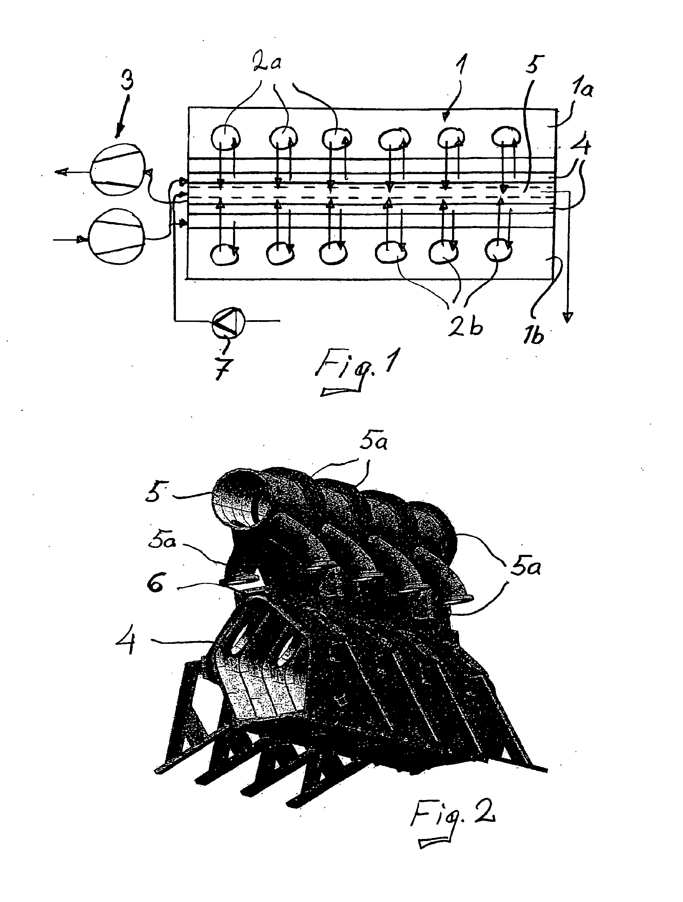

As shown in Fig. 2, the exhaust manifold 5 is attached to the compressed air channel 4 by means of support elements 5a that are spaced at a distance from each other. According to the invention, the compressed air channel 4 is provided with a coolant channel 6 that is integrated into it and located between the compressed air channel 4 and the exhaust manifold 5 so that the support elements 5a are fixed to coolant channel 6. The cooling water of the low-temperature (LT) circuit of the engine is fed into the compressed air channel by a pump 7. The cooling water that has flown through the coolant channel 6 is then fed back to the LT circuit and to be cooled for re-feeding (not shown in detail).

Heat is conducted along the support elements 5a from the exhaust manifold 5 that is heated by the hot exhaust gases. In addition, heat is also transferred to its environment by radiation, but its magnitude in this context is essentially minor. However, by means of the cooling arrangement that comprises the coolant channel 6, the conduction of heat to the compressed air channel 4 and then further to heat the compressed air or suction air that is fed into the cylinders, can be effectively prevented, so that the engine power does not drop, respectively. In practice, it has been found that by means of the cooling arrangement according to the invention, the temperature of the upper part of the compressed air channel can be reduced by about 120-130 °C compared to a corresponding structure that does not employ the cooling arrangement according to the invention.

The invention can be applied regardless of which fuel (gas or liquid) is used and which combustion processes the engine employs (Otto process, diesel process).

The invention is not limited to the embodiments described above, but various modifications are conceivable within the scope of the appended claims.

## Claims

1. A combustion engine comprising several cylinders (2a, 2b), which are arranged in at least one row, the engine being provided with an air compressor (3) and a compressed air channel (4) that extends over substantially the entire length of the cylinder row, for feeding compressed air into the cylinders (2a, 2b), whereby the compressed air channel (4) is located adjacent to the cylinder row, and with an exhaust manifold (5) that is in communication with the cylinders (2a, 2b) and supported by the compressed air channel (4), whereby a cooling arrangement is arranged between the compressed air channel (4) and the exhaust manifold (5), **characterized in that** the cooling arrangement comprises a coolant channel (6) which is an integral part of the compressed air channel (4) and is arranged such that the exhaust manifold (5) is attached to the compressed air channel (4) via the cooling arrangement by means of a number of support elements (5a) that are at a distance from each other.

2. A combustion engine according to claim 1, **characterized in that** a cooling medium, preferably the cooling water of the low-temperature (LT) circuit of the engine, is arranged to be fed into the cooling arrangement.

3. A combustion engine according to claim 2, **characterized in that** the cooling medium is fed into the cooling arrangement through the end of the engine on the side of the air compressor (3).

4. A combustion engine according to any of the preceding claims, **characterized in that** the combustion engine is a so-called V engine and that the compressed air channel (4), the exhaust manifold (5) and the cooling arrangement are placed between the cylinder rows of the engine.

## Patentansprüche

1. Verbrennungsmotor, der mehrere Zylinder (2a, 2b) umfasst, die in wenigstens einer Reihe angeordnet sind, wobei der Motor mit einem Luftverdichter (3) und einem Druckluftkanal (4), der sich über im Wesentlichen die gesamte Länge der Zylinderreihe erstreckt, um Druckluft in die Zylinder (2a, 2b) einzuspeisen, wobei der Druckluftkanal (4) angrenzend an die Zylinderreihe angeordnet ist, und mit einem Auspuffkrümmer (5), der in Verbindung mit den Zylindern (2a, 2b) steht und durch den Druckluftkanal (4) getragen wird, versehen ist, wobei eine Kühlanordnung zwischen dem Druckluftkanal (4) und dem Auspuffkrümmer (5) angeordnet ist, **dadurch gekennzeichnet, dass** die Kühlanordnung einen Kühlmittelkanal (6) umfasst, der ein integraler Teil des Druckluftkanals (4) ist und derart angeordnet ist, dass der Auspuffkrümmer (5) über die Kühlanordnung mit Hilfe einer Anzahl von Stützelementen (5a), die sich in einem Abstand voneinander befinden, an dem Druckluftkanal (4) befestigt ist.

2. Verbrennungsmotor nach Anspruch 1, **dadurch gekennzeichnet, dass** ein Kühlmedium, vorzugsweise das Kühlwasser des Niedertemperatur- (NT-) Kreises des Motors, so angeordnet ist, dass es in die Kühlanordnung eingespeist wird.

3. Verbrennungsmotor nach Anspruch 2, **dadurch gekennzeichnet, dass** das Kühlmedium durch das Ende des Motors auf der Seite des Luftverdichters (3) in die Kühlanordnung eingespeist wird.

4. Verbrennungsmotor nach einem der vorhergehenden Ansprüche, **dadurch gekennzeichnet, dass** der Verbrennungsmotor ein sogenannter V-Motor ist und dass der Druckluftkanal (4), der Auspuffkrümmer (5) und die Kühlanordnung zwischen den Zylinderreihen des Motors angeordnet sind.

## Revendications

1. Moteur à combustion interne comprenant plusieurs cylindres (2a, 2b), qui sont agencées en au moins une rangée, le moteur étant pourvu d'un compresseur d'air (3) et d'un canal d'air comprimé (4) qui s'étend sur substantiellement la longueur totale de la rangée de cylindres, pour alimenter de l'air comprimé dans les cylindres (2a, 2b), dans lequel le canal d'air comprimé (4) est situé à côté de la rangée de cylindres, et comportant un collecteur d'échappement (5) qui est en communication avec les cylindres (2a, 2b) et soutenu par le canal d'air comprimé (4), dans lequel un agencement de refroidissement est agencé entre le canal d'air comprimé (4) et le collecteur d'échappement (5), **caractérisé en ce que** l'agencement de refroidissement comprend un canal de liquide de refroidissement (6) qui est partie intégrante du canal d'air comprimé (4) et est agencé de telle sorte que le collecteur d'échappement (5) soit fixé au canal d'air comprimé (4) via l'agencement de refroidissement au moyen d'une pluralité d'éléments de soutien (5a) qui sont à distance les uns des autres.

2. Moteur à combustion interne selon la revendication 1, **caractérisé en ce que** un milieu de refroidissement, de préférence l'eau de refroidissement du circuit à basse température (LT) du moteur, est agencé afin d'être alimenté dans l'agencement de refroidissement.

3. Moteur à combustion interne selon la revendication 2, **caractérisé en ce que** le milieu de refroidissement est alimenté dans l'agencement de refroidissement à travers l'extrémité du moteur sur le côté du compresseur d'air (3).

4. Moteur à combustion interne selon une quelconque des revendications précédentes, **caractérisé en ce que** le moteur à combustion interne est ce que l'on appelle un moteur en V et **en ce que** le canal d'air comprimé (4), le collecteur d'échappement (5) et l'agencement de refroidissement sont placés entre les rangées de cylindres du moteur.
